# FASCICULE DE BREVET EUROPEEN

(11) **EP 0 395 551 B1**
(45) Date de publication et mention de la délivrance du brevet: **19.01.1994**
(21) Numéro de dépôt: 90440029.8
(22) Date de dépôt: 30.03.1990
(51) Int. Cl.: F23J 3/02, F16L 11/00

(54) **Dispositif de ramonage**
Schornsteinfegegerät
Chimney-sweeping device

(30) Priorité: 30.03.1989 FR 8904637; 30.03.1989 FR 8904638
(43) Date de publication de la demande: 31.10.1990
(73) Titulaire: Nickels, Jean-Charles, F-75016 Paris (FR); Fischer, Jean-Pierre, F-77178 Bazoches les Bray (Seine et Marne) (FR); Genin, Pierre, F-91690 Guillerval (Essonne) (FR); Dudermel, René, F-91120 Palaiseau (Essonne) (FR); Metz, Jean-Francois, F-45580 St Hilaire St Mesmin (Loiret) (FR)
(72) Inventeur: Nickels, Jean-Charles, F-75016 Paris (FR); Fischer, Jean-Pierre, F-77118 Bazoches les Bray, Seine/Marne (FR); Blanchard, Henry, F-77176 Savigny, Le Temple, Seine/Marne (FR); Genin, Pierre, F-91690 Guillerval, (Essonne) (FR); Dudermel, René, F-91120 Palaiseau, (Essonne) (FR); Metz, Jean-François, F-45580 St Hilaire St Mesmin, (Loiret) (FR)
(74) Mandataire: Duthoit, Michel Georges André

(56) Documents cités:
- EP-A- 0 010 490
- DE-A- 1 526 144
- GB-A- 657 160
- GB-A- 2 139 312
- US-A- 4 529 009
- US-A- 4 591 389
- US-A- 4 792 363
- US-A- 4 804 020

## Description

L'invention est relative à un dispositif de ramonage destiné au nettoyage des conduits de cheminée ainsi qu'à une ligne de liaison entre un outil et une centrale d'alimentation conçue pour le dit dispositif. Elle trouvera tout particulièrement son application chez les constructeurs de matériel de ramonage.

Le ramonage des cheminées est obligatoire pour des raisons de sécurité. En effet, un conduit obstrué diminue fortement le tirage et peut donc provoquer des refoulements de gaz de combustion et en particulier d'oxyde de carbone au niveau de la chaudière. Ensuite, si les parois du conduit de cheminée sont tapissées de matières hydro-carbonées, une élévation de température dans le conduit de cheminée peut provoquer un incendie. Pour ces raisons, il est vivement recommandé de faire régulièrement nettoyer les conduits de cheminées.

En outre, le rendement d'une chaudière peut être fortement affecté en cas d'encrassement du conduit de cheminée. La quantité de dépôt retrouvée dans les conduits de cheminée dépend très sensiblement du type de combustible utilisé. Par exemple, le charbon provoque un encrassement rapide alors que le gaz naturel au contraire est plus propre.

Par ailleurs, pour un combustible donné, le taux de dépôt est fonction de la température des parois de la cheminée. Ainsi, si une cheminée présente le long de son conduit une zone froide, alors c'est à cet endroit que l'on rencontrera une accumulation de dépôt.

Précisément, il a été récemment constaté que certains appareils de chauffage couramment appelés inserts de cheminée étaient la source d'un nombre croissant de feux de cheminée du fait de leur mode de combustion lente, générateur de distillats combustibles se déposant dans les conduits.

Pour lutter contre la salissure, certains constructeurs ont développé des conduits de cheminée isolés thermiquement, ce qui leur permet de connaître une température de parois intérieures très élevée et donc favorable à un faible encrassement. Cette technique est toutefois coûteuse et peut plus difficilement être mise en oeuvre dans le cas de bâtiments anciens, par ailleurs, elle ne procure réellement de bons résultats que lors d'un fonctionnement continu de la chaudière. Son application s'est donc principalement limitée aux installations industrielles.

La technique du ramonage a beaucoup progressé avec les récents développements techniques. A l'origine, il s'agissait d'un travail typiquement artisanal pour lequel le ramoneur travaillait depuis la partie haute du conduit de cheminée. Pour cela, il devait accéder à la toiture et introduire dans le conduit de cheminée une brosse circulaire appelée "hérisson" qui était suspendue à un lien souple et entraînée vers le bas par une masse lourde telle qu'une boule métallique. Ceci permettait d'accéder au conduit de cheminée sur toute sa longueur et par un mouvement alternatif, le "hérisson" frotte sur la paroi intérieure de la cheminée, ce qui permet de détacher la suie et les autres débris de la paroi et ensuite de ramasser les résidus à l'aide de moyens rudimentaires tels que pelles, balayettes dans la partie basse du conduit. Cette technique requiert l'intervention de deux opérateurs, l'un placé en haut et l'autre en bas du conduit. Le travail exécuté est particulièrement sale tant pour le personnel que pour le local concerné.

Cette façon de procéder présente de nombreux inconvénients. Il faut tout d'abord accéder à la toiture, ce qui fait que le ramonage est saisonnier et requiert du matériel pour accéder en hauteur.

Ensuite, si la cheminée est garnie d'une couverture pour empêcher l'eau de pluie de pénétrer dans le conduit, il faut nécessairement démonter cette pièce pour avoir accès au conduit. Par ailleurs, si le conduit de cheminée n'est pas rectiligne, l'opération devient complexe et il est parfois nécessaire de travailler en plusieurs étapes.

Au total, cette technique artisanale faisait que le ramonage était très long et devait généralement être pratiqué à la belle saison d'où son coût élevé.

Pour améliorer les conditions de travail, les constructeurs de matériel de ramonage ont développé un matériel compatible avec une technique de travail par le bas, c'est-à-dire, que le ramoneur effectue le nettoyage du conduit de cheminée par la base de celle-ci sans qu'il soit nécessaire d'accéder à la partie haute sur le toit.

Pour cela, le ramoneur dispose d'une "tige" possédant une rigidité suffisante pour permettre de pousser un dispositif de grattage du type "hérisson" tout en conservant la souplesse nécessaire pour suivre les dévoiements éventuels (coudes, embranchements, ...) du conduit de fumée.

Les réalisations actuelles les plus courantes de ce type de "tiges" sont constituées par :
- soit un jeu de "cannes" connectables successivement les unes aux autres,
- soit d'une tige de grande longueur stockable sur un enrouleur-dévidoir. Cette tige est de type semi-flexible, ce qui lui permet de se redresser aussitôt qu'elle est introduite dans le conduit.

Les ramoneurs utilisent également un aspirateur de forte puissance pour éliminer au fur et à mesure de leur chute les suies et débris détachés de la paroi du conduit.

Un seul opérateur peut assurer le travail depuis l'orifice inférieur de ramonage sans avoir à monter sur la toiture.

Ce travail est beaucoup moins pénible et dangereux que la méthode artisanale ancienne. Il n'assure cependant pas totalement la propreté des locaux où il est effectué.

Comme précédemment, il ne garantit pas non plus une efficacité totale du nettoyage, celui-ci dépendant pour un type de dépôt déterminé de l'adéquation du système racleur à la géométrie du conduit et de la conscience professionnelle des opérateurs. Il faudrait en effet faire circuler à plusieurs reprises les instruments dans le conduit pour arriver à détacher certains types de salissures alors que généralement un seul passage est pratiqué dans chaque sens et pas toujours sur toute la longueur du conduit.

Toutefois, une économie de temps et de personnel très importante est réalisée d'où les avantages économiques des progrès réalisés.

Alors que, pour un travail sur le toit, il est nécessaire d'utiliser un équipement très léger non motorisé, lors d'un travail par la base de la cheminée, il est possible de mettre en oeuvre des moyens mécaniques qui facilitent et améliorent la qualité du travail.

Les dispositifs mécaniques actuels de ramonage, voir par exemple le dispositif selon le document US-A-4 591 389, utilisent le principe du flexible pour transmettre l'énergie mécanique nécessaire au "hérisson" depuis un moteur fixé à l'autre extrémité du dit flexible. Le flexible se compose d'une gaine extérieure semi-rigide susceptible de soutenir le "hérisson", de le pousser le long du conduit mais également de se plier suffisamment pour suivre le cas échéant les différentes inclinaisons du dit conduit.

A l'intérieur de la gaine se trouve un câble, entraîné en rotation par le moteur, qui assure la transmission du couple mécanique vers le "hérisson" auquel il est fixé.

Ce système assure effectivement un nettoyage plus poussé du conduit, ce qui constitue un avantage important par rapport à la technique artisanale et manuelle. Cependant, certains défauts sont toujours présents en particulier le nettoyage est parfois trop énergique, ce qui entraîne des ruptures de conduit qui est fixe et que les outils employés peuvent être trop brutaux pour des conduits vétustes ou fragiles.

Le couple transmis ne peut être que faible sous peine de rupture du câble ou d'entortillement du flexible. Ensuite, les rayons de courbure que doit pouvoir supporter le flexible doivent toujours être très importants sous peine de blocage ou d'usure anormale du câble. Ceci limite certains accès et requiert un enrouleur pour le flexible de grande dimension. En outre, la compensation du couple transmis par le hérisson sur le flexible est mal aisée à assurer et le flexible a tendance à vriller. Le flexible est donc un accessoire pratique mais relativement onéreux à l'usage en raison de son usure rapide.

Par ailleurs, la complexité sans cesse croissante des appareillages conduit à leur donner de multiples fonctions. Ainsi, par exemple l'outil de travail doit être à même de nettoyer le conduit mais en même temps à transmettre l'image du travail accompli et également donner des renseignements sur certains paramètres physiques ou chimiques concernant le processus en cours. Ces exigences font qu'aujourd'hui, les organes de travail ne peuvent plus se satisfaire d'une simple liaison comme cela se rencontrait par exemple avec le nettoyage effectué par une brosse entraînée par un flexible dans une gaine.

Les constructeurs sont donc amenés à utiliser actuellement comme éléments de liaison une juxtaposition de moyens, chacun d'eux étant à action spécifique.

On rencontre par exemple l'utilisation d'un tuyau souple pour véhiculer le fluide moteur. Ce tuyau étanche résiste à la pression mais ne comporte aucune caractéristique mécanique adaptée au compromis de rigidité et de flexibilité recherché pour permettre d'assurer le soutien mécanique et le déplacement de l'organe fonctionnel le long de la géométrie du conduit.

Le câble électrique à conducteurs multiples est bien adapté pour permettre l'échange de données et éventuellement la fourniture d'énergie électrique mais ne répond pas non plus aux exigences mécaniques nécessaires.

Il faut donc leur adjoindre un jonc ou gaine plus ou moins adapté pour transmettre l'effort mécanique de traction ou de poussée tout en s'adaptant aux courbures du conduit.

L'obligation d'associer des éléments de liaison spécifiques cause de nombreux problèmes de fonctionnement. On rencontre des emmêlages, des pincements, des coupures d'éléments de liaison faible et il est également difficile de guider et de transmettre des efforts à un paquet d'éléments de liaison. Il faut également souligner la nécessité d'employer de multiples connecteurs aux extrémités pour raccorder chaque élément de liaison.

Le but principal de la présente invention est de présenter un dispositif de ramonage qui offre une grande souplesse d'emploi. En particulier, l'ensemble du travail est effectué par la base de la cheminée et les avantages par rapport au flexible traditionnel résident dans une diminution, voire dans certains cas une quasi suppression de la partie tournante du flexible formant la ligne de soutien du hérisson. L'opérateur peut ainsi travailler dans de bonnes conditions sans risque d'entortillement de la ligne.

On constate également une diminution très sensible des vibrations mécaniques répercutées le long de la ligne de soutien du hérisson. Ces avantages étant obtenus sans augmentation sensible du coût de l'équipement.

Il faut également noter que la ligne peut être très longue sans altération du rendement et que l'on peut facilement en modifier la longueur. Par ailleurs, la puissance transmise au hérisson peut être très fortement accrue par rapport à celle transmise par un flexible classique.

Un autre but de la présente invention est de présenter un dispositif de ramonage de conception modulaire, ce qui lui permet de s'adapter aux différents types de travaux à effectuer avec une bonne maîtrise des différents paramètres du nettoyage d'un conduit ou de ses équipements annexes.

Un autre but de la présente invention est de présenter une ligne de liaison d'une part entre un outil de travail et d'autre part une centrale de pilotage et d'alimentation à distance qui soit multi-fonction, c'est-à-dire que l'élément de liaison de l'invention est à même de fournir et transporter l'ensemble des besoins nécessaires à l'outil de travail et à la centrale de pilotage et d'alimentation pour fonctionner correctement.

La circulation des besoins peut être bi-directionnelle, c'est-à-dire de l'organe de travail vers la centrale de pilotage et d'alimentation et inversement, et se présentera sous des formes multiples telles que circulation d'un fluide, de gaz, d'un rayonnement optique, d'un courant ou signaux électriques....

La construction d'éléments de liaison dépend dans chaque cas des besoins spécifiques. Toutefois, en toute circonstance, un compromis entre rigidité et flexibilité doit être obtenu pour autoriser un fonctionnement adapté de l'organe fonctionnel.

Un rayon de courbure minimum est accordé à l'élément de liaison pour faciliter son stockage par enroulement sur touret. Cette flexibilité lui permet également de suivre des conduits sinueux. Toutefois, la rigidité de l'élément de liaison permet d'assurer un positionnement rigoureux de l'organe fonctionnel et de supporter les contraintes mécaniques susceptibles d'être engendrées au niveau de la liaison par le travail des outils.

Selon l'invention, le dispositif de ramonage, destiné au nettoyage des conduits de cheminée, formé d'une ligne semi-rigide et d'un outil de travail rotatif, tel que notamment un hérisson, disposé en tête de ligne, aptes à être introduits dans le dit conduit de cheminée à nettoyer (voir par exemple le dispositif selon le document US-A-4 591 389), est caractérisé par le fait qu'il comprend :
- un moteur d'entraînement de l'outil, placé en tête de ligne,
- la dite ligne dont le rôle est d'assurer au moins le guidage et le soutien de l'outil et de son moteur ainsi que la fourniture d'énergie pour le moteur depuis une centrale d'alimentation située en bas de ligne, constituée sous la forme de :
   - un tuyau étanche qui sert à l'acheminement du fluide moteur,
- une structure semi-rigide, qui, en combinaison avec le dit tuyau limite la torsion et la flexion de la dite ligne.

L'invention sera mieux comprise à la lecture de la description suivante accompagnée de dessins en annexe parmi lesquels:
- la figure 1 schématise la mise en oeuvre du dispositif de ramonage selon la présente invention,
- la figure 2 représente une première réalisation manuelle des moyens de compensation du couple moteur,
- la figure 3 illustre une seconde mise en oeuvre des moyens de compensation du couple moteur à travers un récupérateur de suie,
- les figures 4, 5, 6, et 7 schématisent respectivement, en vue de coupe sectionnelle des exemples de lignes pour le dispositif de ramonage de l'invention selon des modes d'exécution différents,
- la figure 8 schématise un exemple d'installation de nettoyage d'un conduit, contrôlée et commandée à distance, nécessitant une liaison bi-directionnelle entre l'outil et la centrale,
- la figure 9 schématise la structrure de la ligne de liaison, selon la présente invention, notamment destinée à l'installation de la figure 8,
- la figure 10 illustre un mode de réalisation de la ligne de liaison de la figure 9,
- la figure 11 représente un détail de construction de l'enveloppe externe de la ligne de liaison,
- la figure 12 illustre un autre mode de réalisation de la ligne de liaison selon la présente invention, montrée à la figure 9,
- la figure 13 montre une autre variante de réalisation de la ligne.

La présente invention vise un dispositif de ramonage destiné au nettoyage des conduits de cheminée ainsi qu'une ligne de liaison entre un outil et une centrale d'alimentation conçue pour le dit dispositif.

Des progrès importants ont été accomplis, par rapport à la technique traditionnelle, avec l'élaboration des dispositifs mécaniques de ramonage. Ces dispositifs, formés d'un flexible semi-rigide de grande longueur qui comprend à une extrémité le hérisson et à l'autre extrémité un moteur d'entraînement, sont introduits progressivement dans le conduit de cheminée par la base. Cependant, la technique du flexible de grande longueur souffre de quelques défauts tels que ceux rappelés ci-dessus.

Avec le dispositif de ramonage mécanique de la présente invention, il est possible de travailler sur des grandes longueurs avec un couple important sans engendrer de contre-réactions indésirables. Par ailleurs, le dispositif de l'invention est parfaitement adapté aux conduits de cheminée présentant de nombreuses orientations sans diminution du rendement.

Comme rappelé dans le préambule de la présente demande, il sera donc nécessaire de véhiculer différents types d'énergie tels que fluide, gaz, rayonnement optique, courant ou signaux électriques et, dans le cas d'automatisme ou de télécommande, de prévoir une liaison, quelquefois bi-directionnelle, entre l'organe fonctionnel de travail et la centrale de commande.

Dans le cas de nettoyages de conduits, il faut envisager l'alimentation de l'outillage, par exemple au moyen d'air comprimé, puis transmettre une image du travail accompli, et transmettre des paramètres physiques sur le processus en cours comme par exemple couple, vitesse, ou similaire.

Cela étant, l'élément de liaison doit également jouer un rôle mécanique de positionnement, déplacement et soutien de l'organe fonctionnel dans le conduit.

En outre, si une action chimique est requise, il sera également nécessaire d'envoyer par la liaison un produit chimique destiné à être pulvérisé.

La présente invention propose une structure qui permet de répondre à ces différents objectifs et permet de pallier aux inconvénients posés par les réalisations connues à ce jour.

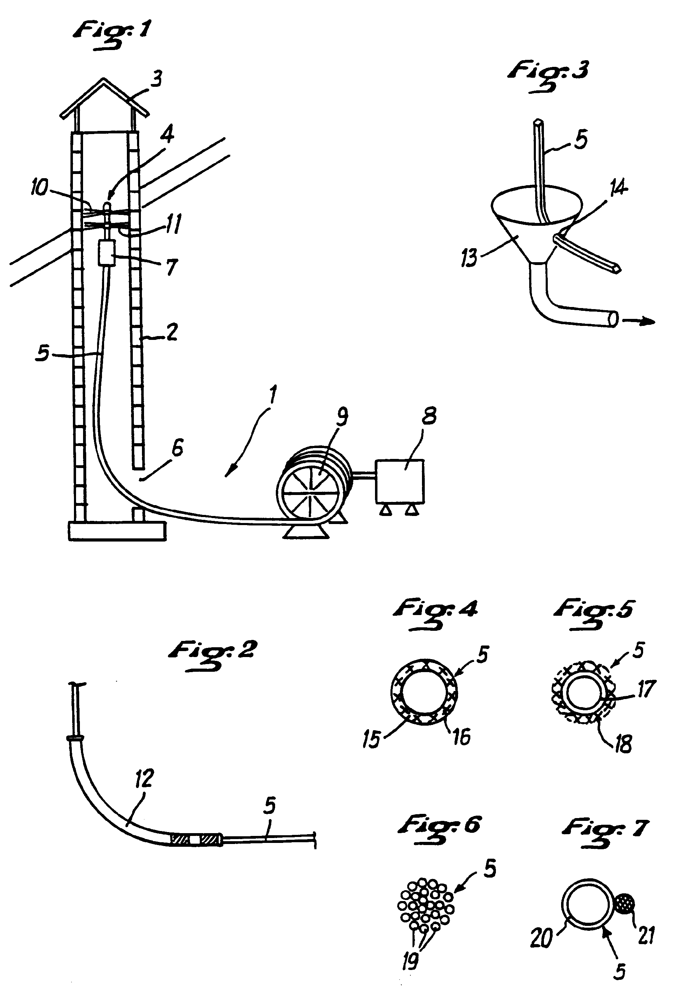

La figure 1 schématise l'utilisation du dispositif 1 de ramonage d'un conduit 2 de cheminée selon la présente invention. Le travail est effectué depuis la base de la cheminée 2, celle-ci peut donc présenter sans aucune gêne à sa partie supérieure un déflecteur 3 destiné à écarter les eaux de pluie.

Le dispositif de ramonage 1 comprend un outil de travail rotatif 4, tel qu'un hérisson par exemple, destiné à gratter la paroi intérieure du conduit de cheminée 2. Cet outil 4 est placé en tête d'une ligne 5 semi-rigide. Une ouverture 6 placée à la base du conduit de cheminée 2 permet d'introduire l'ensemble outil 4 et ligne 5 par le bas de la cheminée.

Selon l'invention, le dispositif 1 comprend en outre un moteur 7 d'entraînement de l'outil 4. Cela étant, l'outil 4 et son moteur 7 sont tous deux placés en tête de la ligne 5, cette dernière assurant au moins d'une part le guidage et le soutien de l'outil 4 et de son moteur 7 et d'autre part la fourniture d'énergie pour le moteur 7, depuis une centrale d'alimentation 8 située en bas de ligne.

Quoiqu'un moteur électrique 7 puisse être utilisé pour assurer l'entraînement de l'outil 4, auquel cas la ligne 5 devra renfermer des conducteurs électriques, on utilisera, de préférence, un moteur pneumatique 7, alimenté à partir d'une source d'air comprimé 8, raccordée à la ligne 5.

Le moteur pneumatique présente un excellent rapport puissance/poids, ce qui est très favorable dans l'application envisagée ici. La ligne 5 doit être suffisamment rigide pour soutenir l'outil 4 et son moteur 7 mais doit présenter suffisamment de flexibilité pour supporter de faibles rayons de courbure.

La transmission d'énergie jusqu'au moteur 7 ne souffre pas de la longueur de la ligne 5 ni de son profil courbe. A titre d'exemple, on a obtenu satisfaction en utilisant un moteur pneumatique fonctionnant sous 7 bars pour une puissance d'environ 500 watts avec un couple d'environ 0,75 mN.

D'une manière plus générale, on peut décomposer le dispositif de la présente invention en trois parties principales.

Tout d'abord, les outillages placés en tête de ligne qui agissent sur leur environnement immédiat dans le conduit. Ce sont par exemple des têtes de nettoyage, grattage, brossage, pulvérisation, garnissage, enduisage ou autre ou encore des capteurs de saisie de l'environnement. Il peut s'agir de capteurs de position, de pression, de force, d'image ou autre.

On trouve ensuite les organes extérieurs au conduit. Il s'agit des installations chargées de répondre aux besoins de l'outillage précédent. Par exemple, la fourniture peut se faire sous forme d'air comprimé, d'aspiration, d'électricité, de fluide, gaz ou autre ou encore d'installations d'exploitation, de pilotage, de commande, de traitement des informations fournies par l'outillage placé en tête de ligne.

Enfin, on trouve des éléments de liaison intermédiaire chargés de véhiculer les échanges entre l'outillage et les organes extérieurs au conduit. Ces organes intermédiaires prennent en charge le déplacement de l'outillage dans le conduit, leur connexion avec les organes extérieurs au conduit.

Selon les applications, des combinaisons particulières pourront être adoptées pour disposer d'un ensemble parfaitement adapté à la configuration rencontrée.

Par exemple, un dispositif complet pourra être formé de :
- un outillage mécanique formé d'un moteur pneumatique avec une brosse rotative,
- un capteur de position donnant l'inclinaison de la tête de ligne par rapport à la verticale,
- des organes externes constitués d'un enrouleur/dérouleur des moyens de liaison, alimentés par un groupe compresseur d'air et un système d'adaptation de la pression d'air comprimé alimentant le moteur en fonction du couple absorbé par l'outillage et de son inclinaison,
- des moyens de liaison intermédiaire entre outillage et organe externe tel qu'un tuyau d'air comprimé associé à un câble conducteur électrique.

Pour certaines applications, on pourrait utiliser le même outillage et les mêmes organes extérieurs mais cette fois-ci avec un élément de liaison intermédiaire constitué d'une canne tubulaire rigide munie d'un organe de réglage du débit d'air comprimé raccordé d'un côté au tuyau et de l'autre côté au moteur.

Actuellement, la qualité du travail exécuté dépend essentiellement du savoir-faire de l'opérateur et les paramètres du nettoyage ne sont guère maîtrisés.

En effet, la vitesse de déplacement de l'organe de nettoyage dans le conduit résulte uniquement de l'action manuelle de l'opérateur. La vitesse de rotation des outils de nettoyage rotatifs, lorsqu'ils sont utilisés est fixe. La longueur de conduit effectivement nettoyée ou ramonée dépend de l'appréciation de l'opérateur : d'après le nombre de cannes enfilées bout à bout dans le conduit ou d'après les marques qu'il a pu faire sur le "jonc" ou le "flexible" de grande longueur qu'il emploie. Aucun autre paramètre objectif n'est mesuré ni pris en compte.

Avec le dispositif de la présente invention, bien au contraire, il est prévu de contrôler de manière précise, reproductible et programmable l'ensemble des paramètres caractérisant le nettoyage des conduits. En particulier, on pourra contrôler :
- la position de la tête de nettoyage dans le conduit c'est-à-dire la distance entre la tête et l'entrée du conduit par exemple au moyen d'un capteur enregistrant le passage et le sens du passage des moyens de liaison reliant la tête aux organes externes,
- la verticalité, l'inclinaison ou le renversement éventuel de la tête de nettoyage dans le conduit mesurés par exemple à l'aide d'un capteur du genre clinomètre placé dans l'outillage de tête,
- la vitesse de déplacement du système de nettoyage dans le conduit déterminé par exemple en introduisant le facteur intervalle de temps pour calculer la vitesse à partir des indications de positions successives du capteur précédent,
- la force nécessaire au déplacement de l'outillage de nettoyage dans le conduit mesurée par exemple à partir du couple de rotation exercé par le moteur d'entraînement sur les moyens de liaison intermédiaire,
- la vitesse de rotation de l'outillage de nettoyage et détection d'un blocage éventuel par exemple à l'aide d'un capteur de vitesse de rotation placé dans l'outillage de tête ou s'il s'agit d'un moteur pneumatique indirectement à partir de la mesure du débit d'air comprimé,
- le couple résistant opposé au couple de rotation occasionné par le frottement des outillages de nettoyage sur la paroi mesuré indirectement à partir de la vitesse de rotation du moteur pneumatique ou de la pression d'air comprimé qu'il alimente.

D'autres paramètres peuvent également être introduits tels que le sens de rotation de la tête de nettoyage, type d'outil utilisé, proximité d'un obstacle dans le conduit, ....

De préférence, les moteurs utilisés sont à vitesse variable et le sens de rotation peut être inversé. Ceci permet par exemple de frotter les salissures sous un angle différent de manière à mieux les détacher. Un sens de rotation est adopté lors de la montée du dispositif, l'autre sens de rotation est adopté lors de la descente.

Ceci permet également de dégager l'outillage de nettoyage s'il se trouve coincer à un endroit quelconque.

Par ailleurs, le frottement d'un hérisson 4 sur les parois de la cheminée 2 occasionne la création d'un couple qui se retransmet intégralement à la ligne 5. Pour compenser ce couple, l'Homme de l'Art connaît l'utilisation d'un enrouleur 9 autour duquel la ligne 5 est placée, cet enrouleur 9 étant pesant ou bénéficiant d'une embase large pour supporter le couple sans se renverser. De préférence, le dispositif de ramonage de l'invention comporte des moyens de compensation du couple moteur.

Selon un premier mode de réalisation, ces moyens de compensation se présentent sous la forme d'au moins deux hérissons 10 et 11, chacun d'eux étant entraîné par le moteur 7 en sens contraire. Pour ce faire, le moteur est équipé d'une boîte de transmission adaptée. Les couples de frottement de chacun des hérissons 10 et 11 se contrebalancent d'où la transmission d'un effort minime le long de la ligne 5. Il s'agit d'une technique parfaitement adaptée si ce n'est qu'elle alourdit quelque peu la tête de ligne.

On peut également concevoir d'équiper la tête de ligne 5 d'un double outillage distinct susceptible d'être mis en action séparément ou conjointement par un mécanisme adapté tel qu'une clavette d'entraînement ou un engrenage porté par une partie de l'arbre moteur et pouvant prendre des positions diverses par rapport à des rainures ménagées dans les alésages des porte-outils. Selon la position relative de la clavette d'entraînement, et de l'alésage de chacun des porte-outils, un seul d'entre eux ou les deux outils sont entraînés. Divers dispositifs tels qu'un coulissement de l'arbre porte-clavette ou le coulissement de la face d'appui des porte-outils peuvent permettre cette variation des positions relatives des divers éléments concernés. Cette disposition pourrait bien entendu être étendue à plus de deux outils et combinée le cas échéant le mécanisme permettant de faire tourner les outils en sens inverse.

L'une des applications intéressantes de ce mécanisme consiste à faire fonctionner un outil de grattage énergique des salissures lors de la montée de la ligne avec un couple et une vitesse de rotation adaptés à cet outillage spécifique et par contre utiliser un outillage de brossage beaucoup plus doux pour le parachèvement du nettoyage à la descente de la ligne avec un couple à une vitesse différente de ceux envisagés précédemment.

L'inversion du sens de travail de l'outillage peut être automatisée en l'associant au sens de déplacement des moyens de liaison. Lors de la montée, la force qui s'oppose à la pénétration de la ligne vers le haut tend à faire redescendre l'outillage par rapport à l'arbre porte-clavette et ceci actionne l'outil de grattage énergique. Par contre à la descente, la force de retenue de l'outil s'oppose à la traction de la ligne, ce qui tend à faire monter l'outillage par rapport à l'arbre porte-clavette et ceci actionne l'outil de brossage doux.

Bien entendu, un dispositif de commande à distance pourrait parfaitement être employé pour déterminer le sens de rotation du moteur, ou plus généralement un dispositif automatique de commande pourrait ajuster certains paramètres en fonction des renseignements fournis par les différents capteurs.

Il est avantageux d'employer un mécanisme motorisé pour assurer le déplacement des outils le long du conduit de cheminée. Ceci d'une part pour diminuer la pénibilité du travail et d'autre part pour assurer une vitesse de déplacement constante fixée en fonction des caractéristiques du conduit et des salissures. Mieux encore, la vitesse de ce déplacement peut être asservie à un programme prédéterminé fait en fonction des indications des capteurs transmettant des informations concernant les paramètres significatifs de l'opération de nettoyage tels que la position de l'outillage dans le conduit, les forces de réaction opposées au déplacement, le couple résistant opposé au moteur, etc....

Cette localisation du déplacement peut être réalisée par différents moyens tels que :
- la motorisation de la rotation d'un enrouleur/dérouleur 9 de la ligne 5 associée à un guidage de la dite ligne entre l'enrouleur 9 et l'entrée du conduit 6,
- la motorisation d'un mécanisme d'entraînement de la ligne 5 à l'entrée 6 du conduit, cet entraînement pourrait par exemple être effectué à l'aide d'un ensemble de galets presseurs motorisés en forme de diabolo pour épouser la forme de la ligne et l'entraîner dans le conduit.

Bien entendu, cet entraînement est réversible pour non seulement assurer la montée mais également la descente de la ligne le long du conduit.

L'outil 4 et le moteur 7 pourront également être combinés sous la forme d'un système à réaction composé d'au moins un bras relié à la ligne 5 d'alimentation en air comprimé, qui peut tourner librement par rapport à cette ligne et portant à son extrémité une buse de soufflage légèrement inclinée par rapport à l'axe de rotation.

Le puissant jet d'air créé par la buse souffle contre la paroi du conduit et aura deux conséquences :
- d'une part, la réaction du jet d'air légèrement incliné par rapport à l'axe de rotation provoque la rotation de l'outil. Ce dernier pourra être par exemple formé de chaînettes, fils métalliques ou autres fixés à l'axe de rotation,
- la puissance de ce jet d'air décollera ou finira de décoller les salissures du conduit et créera en combinaison avec un dispositif d'aspiration en bas du conduit, un courant d'air descendant puissant entraînant les particules détachées du conduit vers le bas et leur dispositif d'évacuation. Pour équilibrer l'équipage mobile, il y aura avantage à utiliser plus d'un bras associé à une buse mais par exemple trois ou quatre bras. La longueur de ceux-ci sera réglable pour s'adapter aux dimensions des conduits rencontrés.

Cet équipement est par exemple bien adapté au nettoyage des conduits de chauffage au gaz dits "VMC gaz" dans lesquels les salissures sont moindres et les parois à la fois plus régulières et plus fragiles.

Une autre mise en oeuvre plus simple est illustrée à la figure 2. Elle consiste à utiliser une crosse 12, tenue manuellement, à travers laquelle la ligne 5 est enfilée. Cette dernière peut coulisser dans la crosse 12 mais ne doit pas tourner à l'intérieur. Pour cela, on peut utiliser une ligne 5 présentant un profil non circulaire et une crosse 12 dont le profil intérieur est correspondant.

Dans de nombreux cas, on utilise à la base du conduit de cheminée 2 un récupérateur de suie qui comporte un entonnoir 13 tel qu'illustré à la figure 3, raccordé à une centrale d'aspiration non illustrée. Les particules de suie détachées par l'action du hérisson tombent le long du conduit et sont récupérées par l'entonnoir 13 puis dirigées vers la centrale d'aspiration.

Dans ce cas, on peut mettre à profit la présence de l'entonnoir 13 pour bloquer le couteau de rotation transmis par la ligne 5. A cet effet, l'entonnoir 13 est percé d'un orifice 14 dont la section correspond au profil sectionnel de la ligne 5. Ce profil sectionnel ne doit pas être circulaire mais peut par exemple être carré. Ainsi, tout couple présent sur la ligne 5 est intégralement transmis à l'entonnoir 13 du récupérateur de suie. Il s'agit d'un élément massif relié à une centrale d'aspiration qui est parfaitement à même à compenser le couple moteur.

Selon une version plus élaborée du dispositif de ramonage de l'invention, ce dernier comprend un système de commande intégré dans la tête de ligne 5 qui régule l'admission d'air comprimé au moteur 7 en fonction du couple transmis par l'outil 4. Ceci permet de fonctionner toujours dans d'excellentes conditions en évitant les blocages et surcharges.

Afin de rendre le dispositif de la présente invention autonome, il est apparu opportun de disposer d'une centrale d'alimentation 8 placée à la base de la ligne 5. En général, pour assurer un bon fonctionnement du dispositif de la présente invention, il est nécessaire de disposer d'au moins deux sources d'énergie différentes telle qu'une source d'air comprimé pour faire fonctionner le moteur d'entraînement de l'outil et une source de vide pour aspirer les déchets et salissures enlevés au conduit.

A titre d'exemple, la fourniture d'énergie pourraît être assurée par un générateur installé sur un véhicule léger qui comprendrait un moteur d'entraînement de type diesel, d'une pompe à vide et d'un compresseur à air.

En outre, il est possible d'envisager l'emploi d'une télécommande pour que l'opérateur puisse piloter à distance ou contrôler l'ensemble des paramètres influençant le nettoyage.

La construction de la ligne 5 doit faire l'objet d'une attention particulière. Il faut en effet disposer à la fois d'une ligne semi-rigide pour assurer au moins le guidage et le soutien du moteur 7 et de l'outillage 4 tout en assurant l'approvisionnement en air comprimé du dit moteur 7.

Une première solution proposée pour la structure de la ligne 5 est illustrée à la figure 4. On utilise une gaine tubulaire étanche telle qu'en polypropylène 15 dans laquelle on inclut des fibres de verre 16 pour donner à l'ensemble suffisamment de rigidité.

A la figure 5, on utilise dans la partie centrale de la ligne 5 un tuyau d'air comprimé 17 de type courant autour duquel on place une gaine 18 de fibre de verre.

A la figure 6, la ligne 5 est formée de tuyaux de faible section 19 extrudés dans une matière disposant de propriétés mécaniques nécessaires. En assemblant en faisceau comme cela est illustré à la figure 6, il est possible d'obtenir un ensemble ayant les qualités requises pour la distribution d'air comprimé.

La figure 7 représente une conception de ligne 5 selon laquelle les fonctions sont dissociées. Un tuyau 20 assure la distribution d'air comprimé et un jonc 21 réalisé dans une matière orientée procure les propriétés mécaniques recherchées.

La technique de ramonage développée ici est essentiellement mécanique mais pourrait parfaitement être associée à des techniques chimiques.

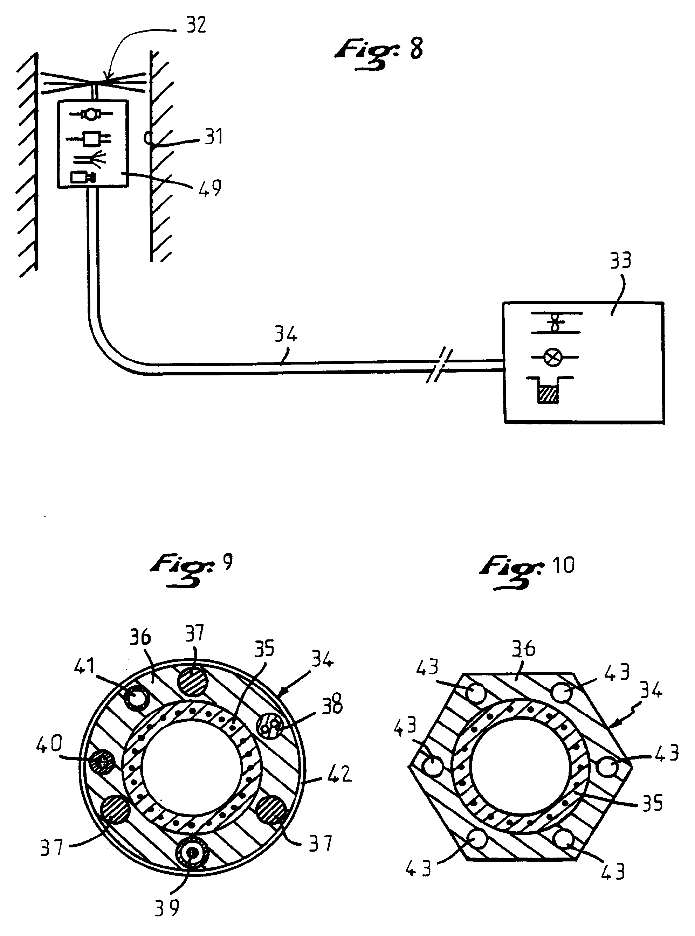

Dans certains cas, des installations de nettoyage plus élaborées nécessitent une liaison bi-directionnelle. La figure 8, par exemple, montre une telle installation.

Il s'agit par exemple d'effectuer un travail dans un conduit 31 à l'aide d'un outil 32 fonctionnel de travail et d'exploration. Cet outil 32 comporte un appareillage qui lui permet par exemple de reconnaître le milieu dans lequel il évolue, de contrôler le travail effectué ou autre. Ainsi, l'outil de travail comprend un outillage motorisé 49, des capteurs, des sondes, des buses de pulvérisation, ....

Une centrale 33 de commande et d'alimentation de l'outil fonctionnel 32 est placé à distance généralement à l'entrée du conduit 31. Son rôle est de contrôler les opérations en cours et de fournir à l'organe fonctionnel l'énergie, les commandes, les produits nécessaires à son action.

Les échanges entre l'outil de travail 32 et la centrale de commande et d'alimentation à distance 33 transitent intégralement par une ligne de liaison 34, selon la présente invention. De plus, la ligne de liaison 34 assure le guidage et le soutien mécanique de l'outil fonctionnel 32 dans le conduit 31. Pour cela, la ligne de liaison 34 devra disposer d'un rapport flexibilité/rigidité bien déterminé.

Selon la présente invention, la ligne de liaison 34 présente une structure très particulière qui lui permet de réunir l'ensemble des caractéristiques recherchées.

La figure 9 illustre, en vue de coupe, la section de la ligne de liaison 34, montrant sa structure interne. Elle comporte un tuyau central 35 étanche qui sert à l'acheminement du fluide moteur généralement de l'air comprimé. Il s'agit d'un tuyau souple.

L'élément 34 comporte également une enveloppe externe 36 qui entoure le dit tuyau 35, cette enveloppe 36 est semi-rigide et en combinaison avec le tuyau 35 limite la torsion et la flexion de la ligne 34.

Dans l'exemple choisi, l'enveloppe externe 36 est rigidifiée par la présence de joncs 37 noyés dans la masse.

En outre, une série d'alvéoles placées dans l'une ou l'autre des parties précédentes 35 ou 36 sont présentes et dans lesquelles sont introduits des conducteurs électriques 38, et/ou des câbles, filins ou flexibles de transmission de force 39, et/ou des fibres optiques 40, et/ou des tubes d'amenée de produit 41 ou autre.

Eventuellement, une armature ou gaine extérieure 42 est installée à la périphérie pour procurer à l'ensemble une protection mécanique.

La figure 10 illustre un autre mode de réalisation de ligne selon la présente invention. La ligne de liaison 34 comporte un tuyau central souple 35 qui sert à l'acheminement du fluide moteur tel que air comprimé et une enveloppe externe 36 dans laquelle sont creusées une série d'alvéoles 43. Cette enveloppe 36 de rigidification peut être co-extrudée avec le tuyau central 35. Les alvéoles 43 forment des passages qui peuvent éventuellement être remplis par des conducteurs électriques, fibres optiques ou autres.

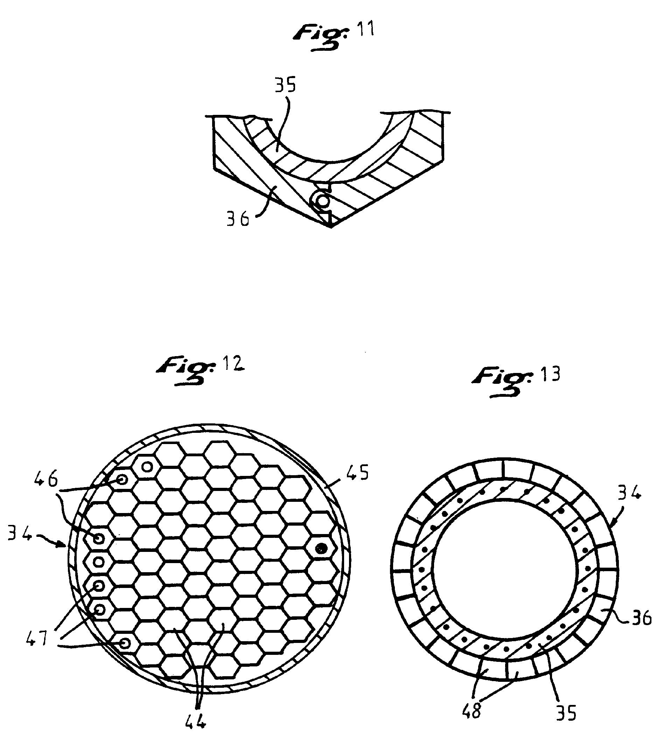

La figure 11 montre une variante de réalisation de l'enveloppe externe 36 selon laquelle celle-ci est clipsée autour du tuyau central 35, ce qui permet une fabrication séparée de deux parties.

La figure 12 illustre un autre mode de réalisation de la ligne de liaison 34. Selon cette conception, le tuyau central est formé d'une pluralité de mini conduits 44 assemblés par une jointure élastique. Chacun de ces mini conduits 44 est réalisé dans une matière possédant des propriétés de rigidité et d'élasticité permettant d'obtenir par leur combinaison un ensemble homogène bénéficiant des caractéristiques de rigidité et d'élasticité attendues.

Les mini conduits 44 sont de préférence liés par un joint élastique d'assemblage, ce qui autorise de légers mouvements différentiels entre les mini conduits 44 leur permettant par exemple de courber légèrement le faisceau qu'ils constituent par leur assemblage.

Il est avantageux d'utiliser des mini conduits 44 dont le profil forme un faisceau à bords jointifs. Dans l'exemple choisi, les mini conduits 44 forment un faisceau en nids d'abeilles. Ceci permet d'utiliser des mini conduits qui, pris isolément, pourraient ne pas résister aux pressions de service exigées pour le transport du fluide moteur mais qui en groupe s'équilibrent .

Une couche périmétrique d'enrobage 45 est utilisée pour constituer l'enveloppe externe 36 de la ligne de liaison 34. Plusieurs solutions peuvent être envisageables à ce niveau, ainsi l'enveloppe externe 36 peut être réalisée dans une même matière que celle employée pour les mini conduits 44 mais en épaisseur plus forte pour contenir la pression interne. Une autre matière plus élastique, renforcée ou non, peut être également utilisée telle que celle utilisée pour la fabrication de tuyaux sous pression.

On peut encore envisager un remplissage systématique des mini conduits 44 périphériques, ce remplissage étant effectué avec une matière qui confère à l'ensemble des caractéristiques mécaniques de résistance à la pression et de semi-rigidité voulue. On pourrait également utiliser des mini conduits extérieurs en profil plein.

Les mini conduits 44 peuvent être considérés également pour assurer non seulement la transmission du fluide moteur mais également à titre d'alvéoles pour remplir les différentes fonctions que doit nécessairement disposer la ligne de liaison 34. Ainsi, dans l'exemple de la figure 12, certains mini conduits 44 sont remplis avec des conducteurs électriques 46 pour la transmission de signaux. D'autres peuvent servir à véhiculer un fluide chimique 47. Ces exemples ne sont pas limitatifs.

Au cas où des écarts de pression entre les différentes alvéoles risqueraient de dépasser les caractéristiques admissibles par ces dernières, différentes solutions peuvent être employées. On peut relier les alvéoles voisines à une même source d'air comprimé pour rétablir des équipressions même si certaines alvéoles sont équipées par des fonctions de transmission électrique, lumineuse, ou autre. On peut également utiliser un matériau de remplissage pour garnir certaines alvéoles et limiter ainsi la déformation de leur paroi.

L'intérêt de l'utilisation d'une structure alvéolaire en mini conduit est qu'elle peut être configurée selon les circonstances. En effet, chacune des alvéoles est susceptible de remplir une fonction quelconque en fonction de ce remplissage.

La figure 13 représente un autre mode de réalisation de l'invention. Dans cet exemple, la ligne de liaison 34 comporte dans sa partie centrale un tuyau étanche 35 qui résiste à la pression du fluide moteur. Ce tuyau 35 est entouré d'une enveloppe 36 externe formée d'une association d'alvéoles 48, cette gaine alvéolaire peut être réalisée sous forme d'éléments modulaires faciles à assembler comme par exemple par clipsage.

Les alvéoles 48 peuvent être utilisées pour diverses fonctions, ainsi elles peuvent être garnies de conducteurs électriques, fibres optiques, produits chimiques, ou autres. Il est également possible d'utiliser un matériau de remplissage pour conférer à l'ensemble une certaine rigidité recherchée.

Afin de pouvoir stocker plus facilement la ligne de liaison, il est nécessaire que ce dernier puisse présenter un rayon de courbure minimum correspondant à l'enroulement de la ligne sur un touret.

Dans certaines applications, il est intéressant de connaître avec précision l'enfoncement de la ligne de liaison dans un conduit par exemple. Pour cela, on pourra avantageusement "marquer" la ligne de liaison, en plaçant à l'intérieur à intervalles réguliers des points susceptibles d'agir sur des capteurs extérieurs. Ainsi, en plaçant dans l'une des alvéoles un fil ou une tige fine qui comporte à espacements réguliers des points de marquage pour un capteur externe, il est possible de compter les points pour déterminer avec précision la longueur de la ligne qui a défilé devant le dit capteur. Ce dernier peut être de type magnétique, à effet capacitif, sensible au rayonnement ou autre.

Le calculateur prendra également en compte le sens de défilage pour connaître la longueur de l'élément introduit dans le conduit.

## Revendications

1. Dispositif de ramonage, destiné au nettoyage des conduits de cheminée, formé d'une ligne (5; 34) semi-rigide et d'un outil de travail rotatif (4; 32) tel que notamment un hérisson, disposé en tête de ligne, aptes à être introduits dans le dit conduit (2; 31) de la cheminée à nettoyer, caractérisé par le fait qu'il comprend :
- un moteur d'entraînement (7; 49) de l'outil (4; 32) placé en tête de ligne (5; 34),
- la dite ligne, dont le rôle est d'assurer au moins le guidage et le soutien de l'outil (4; 32) et de son moteur (7; 49) ainsi que la fourniture d'énergie pour le moteur depuis une centrale d'alimentation (8; 33) située en bas de ligne (5; 34), constituée sous la forme de :
- un tuyau étanche (15; 17; 19; 20; 35; 44) qui sert à l'acheminement du fluide moteur,
- une structure (16; 18; 19; 21; 36; 42; 44; 45) semi-rigide, qui, en combinaison avec le dit tuyau limite la torsion et la flexion de la dite ligne.

2. Dispositif selon la revendication 1, caractérisé par le fait qu'il comporte des moyens pour compenser le couple moteur de l'outil de travail.

3. Dispositif selon la revendication 2, caractérisé par le fait que ces moyens de compensation se présentent sous la forme d'au moins deux hérissons (10 et 11) entraînés chacun par le moteur (7) en sens contraire.

4. Dispositif selon la revendication 2, caractérisé par le fait que les moyens se présentent sous la forme d'une crosse (12) à l'intérieur de laquelle la ligne (5) peut coulisser mais non tourner.

5. Dispositif selon la revendication 2, caractérisé par le fait qu'il présente un récupérateur de suie en forme d'entonnoir (13) placé à la base du conduit de cheminée (2), et que l'entonnoir (13) du récupérateur est percé d'un trou (14) non circulaire à travers lequel la ligne (5) de profil correspondant est passée.

6. Dispositif selcn la revendication 1, caractérisé par le fait que l'outil (4) et le moteur d'entraînement (7) sont combinés en un système à réaction formé d'au moins un bras relié à une source d'air comprimé à l'extrémité duquel se trouve une buse inclinée par rapport à l'axe de rotation.

7. Dispositif selon la revendication 1, caractérisé par le fait qu'il comprend un mécanisme d'entraînement de l'outillage (4) qui enclenche les différents outils en fonction du sens de déplacement de la ligne (5).

8. Dispositif selon la revendication 1, caractérisé par le fait que la dite ligne se présente sous la forme d'une gaine étanche (15) à l'intérieur de laquelle des fibres de verre (7) sont incluses.

9. Dispositif selon la revendication 1, caractérisé par le fait que la dite ligne se présente sous la forme d'un tuyau (17) à l'extérieur duquel est placée une gaine (18) de fibres de verre.

10. Dispositif selon la revendication 1, caractérisé par le fait que la dite ligne se présente sous la forme d'un faisceau de tubes (19; 44) de faible section assemblés.

11. Dispositif selon la revendication 1, caractérisé par le fait que la dite ligne se présente sous la forme de :
- un tuyau central (35; 44),
- une enveloppe externe semi-rigide (36; 44, 45),
- une série d'alvéoles (38-41; 43; 44; 48) placées dans l'une ou l'autre des parties précédentes (35, 36) dans lesquelles sont introduits des conducteurs électriques, fibres optiques, produits chimiques ou autres pour assurer une transmission bi-directionnelle des besoins entre l'outil (32) et la centrale de commande et d'alimentation (33).

12. Dispositif selon la revendication 11, caractérisé par le fait qu'elle présente une armature (42) ou gaine extérieure de protection.

13. Dispositif selon la revendication 11, caractérisé par le fait que l'enveloppe (36) est fixée autour du tuyau central (35) par clipsage.

14. Dispositif selon la revendication 11, caractérisé par le fait que l'enveloppe (36) est extrudée sur le tuyau central (35).

15. Dispositif selon la revendication 11, caractérisé par le fait que le tuyau central (35) est formé d'une pluralité de mini conduits (44) assemblés par un joint élastique.

16. Dispositif selon la revendication 11, caractérisé par le fait que l'enveloppe externe (36) est formée d'une gaine alvéolaire (48) formée d'un assemblage de mini conduits.

17. Dispositif selon la revendication 15, caractérisé par le fait que le profil des alvéoles (44) est à bords jointifs.

18. Dispositif selon la revendication 17, caractérisé par le fait que le faisceau de mini conduits (44) présente une structure en nids d'abeilles.

19. Dispositif selon la revendication 11, caractérisé par le fait qu'il est régulièrement marqué par des points susceptibles d'agir sur un capteur extérieur.

20. Dispositif selon la revendication 16, caractérisé par le fait que l'enveloppe externe est formée d'un assemblage d'alvéoles (48) modulaires clipsées entre elles autour d'un tuyau central (35).

## Patentansprüche

1. Fegeranlage zur Reinigung von Schornsteinen, bestehend aus einem Kabel und einer rotierenden Bürste (4; 32) wie zum Beispiel einem Rohrwischer am Ende des Kabels, die in das zu reinigende Schornsteinrohr gesteckt werden können (2; 31), Gekennzeichnet durch:
- einen Motor (7; 49), der die Bürste (4; 32) am Ende des Kabels (5; 34) antreibt:
- das genannte Kabel das zur Aufgabe hat, zumindest die Bürste (4; 32) und deren Motor (7; 49) zu halten und zu führen und, ausgehend von einer Stromquelle (8; 33) am unteren Ende des Kabels (5; 34), die Antriebskraft für den Motor zu liefern. Es besteht aus:
- einem luftdichten Schlauch (15; 17; 19; 20; 35; 44) zur Beförderung der Pressluft und besitzt.
- eine halb biegsame Struktur, die zusammen mit dem Schlauch verhindert, dass sich das Kabel zu stark dreht und biegt

2. Vorrichtung gemäss Artikel 1, gekennzeichnet durch die Tatsache, dass sie die Gegenbewebung der Bürste ausgleicht.

3. Vorrichtung gemäss Artikel 2, gekennzeichnet durch die Tatsache, dass die Gegenbewebung durch mindestens zwei Rohrwischer (10 und 11) aus geglichen wird, die beide vom Motor (7) in Gegenrichtung angetrieben werden.

4. Vorrichtung gemäss Artikel 2, gekennzeichnet durch die Tatsache, dass die Gegenbewebung durch einen Kolben (12) ausgeglichen wird, in dem das Kabel (5) gleiten, sich aber nicht drehen kann.

5. Vorrichtung gemäss Artikel 2, gekennzeichnet durch eine trichterförmige Vorrichtung (13) unter dem zu reinigenden Rohr (2), die den Russ auffängt und in der sich ein nicht rundes Loch (14) befindet, durch das ein Kabel (5) mit entsprechendem Profil läuft.

6. Vorrichtung gemäss Artikel 1, gekennzeichnet durch die Tatsache, dass Bürste (4) und Antriebsmotor (7) zusammen ein Reaktionssystem mit mindestens einem Hebel bilden, der mit einer Pressluftquelle verbunden ist, an dessen Ende sich eine schräg zur Drehachse gestellte Düse befindet.

7. Vorrichtung gemäss Artikel 1, gekennzeichnet durch einen Antriebsmechanismus für die Bürsten (4), der die verschiedenen Geräte je nach der Richtung, in die das Kabel (5) bewegt wird, einschaltet.

8. Vorrichtung gemäss Artikel 1, gekennzeichnet durch die Struktur des genannten Kabels, das aus einem luftdichten Schlauch (15) besteht, der Glasfasern (7) enthält.

9. Vorrichtung gemäss Artikel 1, gekennzeichnet durch die Struktur des genannten Kabels,das aus einem Schlauch (17) besteht, der von einer Hülle (18) aus Glasfasern umgeben ist.

10. Vorrichtung gemäss Artikel 1 gekennzeichnet durch die Struktur des genannten Kabels, das aus einem Bündel von Schlauchen (19; 44) von geringem Durchmesser besteht.

11. Vorrichtung gemäss Artikel 1, gekennzeichnet durch die Struktur des Kabels, bestehend aus:
- einem inneren Schlauch (35; 44)
- einer äusseren halb biegsamen Hülle (36; 44; 45)
- einer Reihe von Zellen (38-41; 43; 44; 48) im Schlauch oder in der Hülle (35; 36), in die elektrische Leiter, optische Fasern, Chemikalien oder anderes eingeführt werden, um den Kontact zwischen Bürste (32) und Schalt- und Stromquelle (33) sicherzustellen.

12. Vorrichtung gemäss Artikel 11, gekennzeichnet durch das Gerüst (42) bzw. den äusseren Schlauch zum Schutz des Kabels.

13. Vorrichtung gemäss Artikel 11, gekennzeichnet durch die Tatsache, dass die Hülle (36) mit Klammern am inneren Schlauch(35) befestigt ist.

14. Vorrichtung gemäss Artikel 11, gekennzeichnet durch die Tatsache, dass die Hülle (36) durch Hitzepressen auf dem inneren Schlauch (35) befestigt ist.

15. Vorrichtung gemäss Artikel 11, gekennzeichnet durch die Struktur des inneren Schlauchs (35), der aus vielen kleinen Rohren (44) besteht, die von einer elastichen Dichtung zusammengehalten werden.

16. Vorrichtung gemäss Artikel 11, gekennzeichnet durch die Struktur der äusseren Hülle (36), die ein Schlauch mit Wabenstruktur bildet, der aus kleinen Röhren bestehen.

17. Vorrichtung gemäss Artikel 15, gekennzeichnet durch das Profil der Alveolen (44), die nahtlos aneinanderstossen.

18. Vorrichtung gemäss Artikel 17, gekennzeichnet durch die wabenförmige Struktur des Bündels der kleinen Röhren.

19. Vorrichtung gemäss Artikel 11, gekennzeichnet durch die Punkte, die sich in regelmässigen Abständen darauf befinden, und die auf äussere Sensoren einwirken können.

20. Vorrichtung gemäss Artikel 16, gekennzeichnet durch die Struktur der äusseren Hülle, die aus einer Verbindung einzelner Zellen (48) besteht, die mit Klammern aneinander befestigt sind und einen inneren Schlauch umgeben (35).

## Claims

1. A chimney sweeping device for the cleaning of chimney flues, made of a semi-rigid line (5; 34) and a rotary working tool (4; 32) as for instance a brush, located at the head of the line, capable of penetrating the flue (2; 31) of the chimney to be swept, characterised in that it comprises :
- a motor (7; 49) driving the tool (4; 32) located at the head of the line (5; 34),
- the above line, whose function is to ensure at least the guidance and support of the tool (4; 32) and of its motor (7; 49) as well as the motor power supply from a central source (8; 33) located at the bottom of the line (5; 34), and made up as follows :
- a sealed pipe (15; 17; 19; 20; 35; 44) through which power flows to the motor,
- a semi-ridig structure (16; 18; 19; 21; 36; 42; 44; 45) which, together with the above pipe limits twisting and bending of the line.

2. A device which, according to Claim 1, is characterised in that means are present to compensate the working tool drive torque.

3. A device which, according to Claim 2, is characterised in that the means of compensation are present in the form of at least two brushes (10 and 11) each of which is driven by the motor (7) in opposing directions.

4. A device which, according to Claim 2, is characterised in that means are present in the form of a shaft (12) within which the line(5) can slide but not twist.

5. A device which, according to Claim 2, is characterised in that a sack for soot is present in the form of a funnel (13) located at the bottom of the chimney flue (2) and there is present in the funnel of the sack for soot a hole (14) which is not round and through which the corresponding profile line (5) runs.

6. A device which, according to Claim 1, is characterised in that the tool (4) and the drive motor (7) are combined into a propelling system made of at least one arm linked to a source of compressed air at the end of which there is a conduit which is slanted in relation to the axis of rotation.

7. A device which, according to Claim 1, is characterised in that it comprises a drive mechanism for the tool (4) which engages the various tools following the movements of the line (5).

8. A device which, according to Claim 1, is characterised in that the line in question is formed of a sealed sleeve (15) in which glass fibres (7) are present.

9. A device which, according to Claim 1, is characterised in that the line in question is formed of a tube (17) outside of which a fibreglass sleeve (18) is located.

10. A device which, according to Claim 1, is characterised in that the line in question is present in the form of a bank of short tubular sections (19; 44) which are put together.

11. A device which, according to Claim 1, is characterised in that the line in question is present in the form of:
- a central pipe (35; 44),
- a semi-rigid external jacket (36; 44,45)
- a series of cells (38-41; 43; 44; 48)
placed in any one of the above portions (35, 36) in which electrical conductors, optic fibres, chemical products or others are introduced in order to ensure a bi-directional transmission of the needs between the tool (32) and the unit of control and distribution (33).

12. A device which, according to Claim 11, is characterised in that the line is equipped with an external reinforcement (42) or protective sleeve.

13. A device which, according to Claim 11, is characterised in that the jacket (36) is fixed round the central pipe (35) by means of clips.

14. A device which, according to Claim 11, is characterised in that the jacket (36) is extruded onto the central pipe (35).

15. A device which, according to Claim 11, is characterised in that the central pipe (35) is made of various mini-tubes (44) linked by elastic joints.

16. A device which, according to Claim 11, is characterised in that the external jacket (36) is made of a cellular sleeve (48) formed by an assembly of mini-tubes.

17. A device which, according to Claim 15, is characterised in that the profile edges of the cells (44) are contiguous.

18. A device which, according to Claim 17, is characterised in that the bank of mini-tubes (44) has the shape of honeycomb.

19. A device which, according to Claim 11, is characterised in that it is marked at regular intervals by points capable of acting upon an external sensor.

20. A device which, according to Claim 16, is characterised in that the external jacket is formed by an assembly of modular cells (48) clipped to each other around a central pipe (35).
